# EUROPEAN PATENT SPECIFICATION

(11) **EP 0 560 448 B1**
(45) Date of publication and mention of the grant of the patent: **24.11.1999**
(21) Application number: 93200677.8
(22) Date of filing: 09.03.1993
(51) Int. Cl.: A01K 1/015, E04F 15/00

(54) **Draining floor covering**
Durchlässiger Bodenbelag
Revêtement de sol perméable

(30) Priority: 11.03.1992 NL 9200455
(43) Date of publication of application: 15.09.1993
(73) Proprietor: STICHTING BEHEER INTELLECTUELE EIGENDOM, 7548 RB Enschede (NL)
(72) Inventor: Hasperhoven, Dirk Johan, NL-7548 RB Enschede (NL)
(74) Representative: Schumann, Bernard Herman Johan

(56) References cited:
- EP-A- 0 524 609
- DE-A- 2 102 084
- DE-A- 2 515 098
- NL-A- 7 701 096

## Description

The invention relates to a floor covering, in particular a stable floor covering, with moisture draining action, said floor covering comprising
a top layer provided with at least a substantially flat upper surface, and
a bottom layer having moisture draining properties and supporting said top layer.

Such a floor covering is known from e.g. DE-A-25 15 098. This prior art document discloses a stable floor covering in which, dependent upon the requirement, granulated and mixed fibre and/or grain material from textile, synthetic or other source, especially from all kinds of rubber, rubber mixtures or rubber waste, together with a suitable, substantially flexible binder are composed into an elastic, resilient floor covering with open pores. Under this floor covering a mattress having larger pores is laid, said mattress functioning as an additional draining element and being composed of three-dimensional twisted or woven synthetic fibres. This prior art floor covering may be moulded homogeneously into a stable.

Relative to the prior art referred to the invention provides a floor covering of the type mentioned in the preamble, which is characterized in that said top layer and said bottom layer are separate from each other;
both the top and bottom layers have non-moisture-absorbing action; and
said bottom layer comprises a plurality of support members to be placed on a floor in mutually abutting relation and each being provided with an upper plate having a plurality of support columns supporting said upper plate and being formed integrally therewith, and a plurality of draining through-holes extending between said support columns.

The top layer of the floor covering according to the invention offers the advantage that it can be laid easily by the stable owner himself without the help of a skilled person. Further a floor covering according to an embodiment of the invention having a top layer comprising two substantially flat mutually parallel surfaces has the economic advantage that, if after extensive use the upper surface of the top layer should display wear, the usual life of the top layer can be prolonged simply by turning it over.

WO-A-86/00718 discloses a floor covering, in particular a stable floor covering, with moisture draining, non-moisture-absorbing action.

This prior art floor covering comprises a top outer layer and a bottom outer layer spatially separated from each other by a non-porous fragmented filler material, wherein the filler material and the material of the outer layers are moisture permeable and non-absorbent. The known floor covering is intended for instance for laying on the solid, usually concrete floor of a horse stable, wherein the use of moisture-absorbent bedding material such as straw or organic fibres becomes unnecessary. It is the object with this stable floor covering to limit in volume the quantity of waste produced by the animal in the stable by not mixing the manure with straw or wood shavings, and in addition by separating the waste at source into a liquid and a solid component. The liquid component sinks through the moisture-permeable floor covering and is drained along the solid ground, while the solid manure constituents remain behind on the floor covering and can be removed therefrom using scrapers.

There are several drawbacks associated with the use of the said prior art floor covering. In order to prevent the filler material enclosed between the top and bottom layer from shifting the floor covering is compartmentalized by mutually connecting the bottom and top layers with a number of seams at regular mutual distances. The known floor covering has as a result a curved upper surface, whereby cleaning thereof is a labour-intensive affair which moreover does not have the desired effect: contaminants will virtually always remain behind in the seams. Another drawback to known floor covering in use as stable floor covering is the poor run-off possibility for the urine passed by an animal. While the urine certainly sinks into the floor covering, it cannot run off to a sufficient degree on the underside thereof as a result of lack of drainage means. To cope with the evident problems of a hygienic nature resulting herefrom, very frequent and labour-intensive maintenance is required.

The floor covering according to the invention is particularly suitable for use for example in spaces where food products are prepared, for instance kitchens of catering establishments, spaces or places where children play or stables for animals. Subject to the intended use of the floor covering the top and bottom layers are selected on the basis of for instance non-slipping, resilience and moisture draining.

With the use of such a floor covering in for instance a stable, the support elements support on a solid ground, usually a concrete floor and the substantially flat surface of the top layer faces upward. Manure in solid form produced by an animal stabled on this floor covering remains lying on the flat top surface from which it can be removed in simple manner with for instance a scraper, while urine sinks through the moisture-permeable, non-moisture-absorbing top layer and falls through the bottom layer onto the (usually slightly sloping) floor and can run off along the floor between the support elements.

In an embodiment of the floor covering according to the invention the top layer contains bonded fibre material.

By making use of bonded fibre material a top layer is available with a particularly good moisture draining action inherent to the use of fibres, while a floor covering is also available with a stable, flat top surface.

In a following embodiment the top layer contains plastic material.

In yet another embodiment the top layer contains bonded rubber particles.

It has been found that with a top layer containing bonded rubber particles a particularly porous, water draining, shock-damping and non-slip stable floor covering is obtained. Such a layer moreover offers the advantage that it can be laid easily by the stable owner himself without the intervention of a skilled person.

The advantages of a floor covering according to the invention are utilized still further when the top layer comprises two substantially flat mutually parallel surfaces.

Such a floor covering has the economic advantage that if after extensive use the upper surface of the top layer should display wear the useful life of the top layer can be prolonged simply by turning it over. A top layer with two flat surfaces moreover offers the advantage that for instance during cleaning it is easy to remove, clean and re-arrange.

In yet a further embodiment the support elements comprise a collection of surfaces oriented substantially perpendicularly of the top layer, bounded on the top at the same height and mutually connected into a grid.

In a floor covering according to the invention the support elements preferably comprise a collection of columns of equal height oriented substantially perpendicularly of the top layer, which columns are mutually connected at their tops into a grid.

Such a floor covering is advantageously applied because the support elements, in this case the columns supporting on the floor, impose no restrictions on the orientation of the bottom layer in relation to the run-off direction of the floor.

In an embodiment the support elements contain rubber in the bottom layer.

A bottom layer whereof the support elements contain rubber is applied with advantage when the top layer is made up, for instance for reasons of water drainage or non-slipping, of one or more materials with poor flexibility, while the floor as a whole should on the contrary preferably possess a determined resilience.

In preference the support elements contain a plastic material in the bottom layer.

A bottom layer manufactured from plastic offers the advantage that it can be cleaned easily and well even after prolonged use, and that it is flexible, whereby it can also be laid on a floor with a less flat or even surface and thus forms a stable and firm ground for the top layer.

It has been found that the advantageous properties of a floor covering according to the invention are utilized particularly well when the support elements contain polyethylene. A bottom layer comprising polyethylene is light, flexible, robust, durable and easy to clean.

The invention will now be elucidated hereinafter on the basis of an embodiment and with reference to the drawing.

In the drawing:
figure 1 shows a part of a horse stable provided with a floor covering according to the invention, and
figure 2 shows a detail of the stable floor covering of figure 1 in a cut away perspective view.

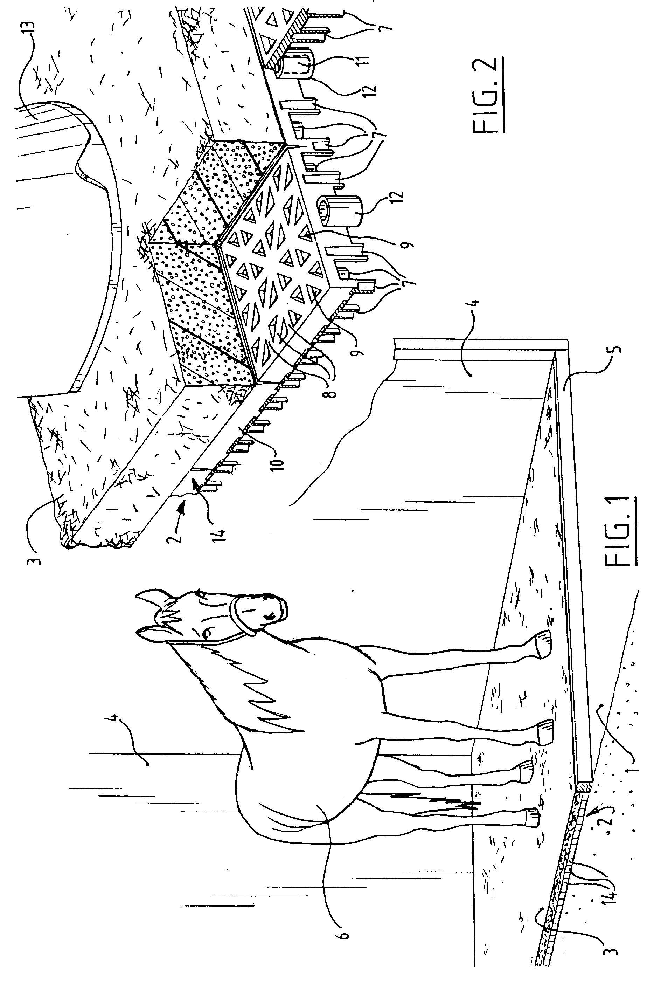

Figure 1 shows a horse stable 1 on which rests a floor covering with bottom layer 2 and top layer 3. The floor covering is enclosed between the walls 4 and a standing edge 5 on surface 1. The figure shows clearly how a horse 6 stands on a substantially flat surface of the top layer 3. Urine from the horse falls onto the top layer 3, seeps therethrough, falls through the bottom layer 2 and runs off along the surface 1, while excreta remains lying on the upper surface of the top layer 3 and can be removed therefrom in simple manner using a scraper.

Figure 2 shows the stall floor covering of figure 1 in more detail, again with a bottom layer 2 and a top layer 3. The latter consists in this example of a plane-parallel layer of bonded rubber particles (for instance re-used rubber) which rests on a polyethylene grid **14**. The grid **14**, per se known, consists of columns 7 of equal height which are connected at the top by strips **8** in transverse, longitudinal and diagonal directions, wherein a column is situated below each point of intersection of these strips **8**. The connecting strips 8 bound drainage holes 9. The bottom layer 2 is built up of segments each provided with a peripheral edge 10, along which edge the grid is cut to size. The figure further shows connecting protrusions 11 and connecting openings 12 which can co-act with connecting openings respectively protrustions of an abutting grid **14** for coupling thereto. The combination of the bottom layer 2 and the top layer 3 forms a shock-absorbing and sound-damping stall floor covering with a non-slip upper surface, whereby stamping or scraping with the hoof 13 by a horse will usually not occur.

## Claims

1. Floor covering (2,3), in particular a stable floor covering, with moisture draining action, said floor covering comprising
a top layer (3) provided with at least a substantially flat upper surface, and
a bottom layer (2) having moisture draining properties and supporting said top layer (3)
**characterized in that**
said top layer (3) and said bottom layer (2) are separate from each other;
both the top (3) and bottom layers (2) have non-moisture-absorbing action; and
said bottom layer (2) comprises a plurality of support members (14) to be placed on a floor (1) in mutually abutting relation and each being provided with an upper plate having a plurality of support columns (7) supporting said upper plate and being formed integrally therewith, and a plurality of draining through-holes (9) extending between said support columns (7).

2. Floor covering according to claim 1,
**characterized in that**
the upper plate comprises a plurality of strips (8) in different directions, wherein a column (7) is situated below a zone of intersection of these strips (8).

3. Floor covering according to claim 1,
**characterized in that**
abutting support members (14) are mutually connectable by means of corresponding pairs of protrusions (11) and openings (12).

4. Floor covering as claimed in claim 1,
**characterized in that**
the top layer (3) contains bonded fibre material.

5. Floor covering as claimed in claim 1,
**characterized in that**
the top layer (3) contains plastic material.

6. Floor covering as claimed in claim 1,
**characterized in that**
the top layer (3) contains bonded rubber particles.

7. Floor covering as claimed in claim 1,
**characterized in that**
the top layer (3) comprises two substantially flat mutually parallel surfaces.

8. Floor covering as claimed in claim 2 or 3,
**characterized in that**
the support members (14) contain rubber.

9. Floor covering as claimed in claim 2 or 3,
**characterized in that**
the support members (14) contain a plastic material.

10. Floor covering as claimed in claim 1,
**characterized in that**
the support members (14) comprise a collection of surfaces oriented substantially perpendicularly of the top layer (3), bounded on the top at the same height and mutually connected into a grid.

## Patentansprüche

1. Bodenbelag (2, 3), insbesondere ein Stallbodenbelag mit einer Feuchtigkeitsableitungswirkung, wobei der Bodenbelag umfaßt:
eine obere Lage (3), die mit einer zumindest im wesentlichen flachen oberen Fläche versehen ist, und
eine untere Lage (2), die Feuchtigkeitsableitungseigenschaften hat und die obere Lage (3) lagert,
**dadurch gekennzeichnet, daß**
die obere Lage (3) und die untere Lage (2) voneinander getrennt sind;
sowohl die obere Lage (3) als auch die untere Lage (2) kein Feuchtigkeits-Absorbierverhalten haben; und
die untere Lage (2) mehrere Lagerteile (14) umfaßt, die auf einem Boden (1) gegenseitig angrenzend angeordnet sind und jeweils mit einer oberen Platte versehen ist, die mehrere Lagersäulen (7) hat, die die obere Platte lagern und die einstückig damit ausgebildet sind, und mehrere Ableitungsdurchgangslöcher (9), die sich zwischen den Lagersäulen (7) erstrecken.

2. Bodenbelag nach Anspruch 1, **dadurch gekennzeichnet, daß**
die obere Platte mehrere Streifen (8) in unterschiedlichen Richtungen umfaßt, wobei eine Säule (7) unter einer Schnittzone dieser Streifen (8) angeordnet ist.

3. Bodenbelag nach Anspruch 1, **dadurch gekennzeichnet, daß**
die aneinander angrenzenden Lagerteile (14) gemeinschaftlich mittels entsprechender Paare von Ansätzen (11) und Öffnungen (12) verbindbar sind.

4. Bodenbelag nach Anspruch 1, **dadurch gekennzeichnet, daß**
die obere Lage (3) gebundenes Fasermaterial enthält.

5. Bodenbelag nach Anspruch 1, **dadurch gekennzeichnet, daß**
die obere Lage (3) Plastikmaterial enthält.

6. Bodenbelag nach Anspruch 1, **dadurch gekennzeichnet, daß**
die obere Lage (3) gebundene Gummipartikel enthält.

7. Bodenbelag nach Anspruch 1, **dadurch gekennzeichnet, daß**
die obere Lage (3) zwei im wesentlichen flache gegenseitig parallele Flächen umfaßt.

8. Bodenbelag nach Anspruch 2 oder 3, dadurch gekennzeichnet, daß
die Lagerteile (14) Gummi enthalten.

9. Bodenbelag nach Anspruch 2 oder 3, **dadurch gekennzeichnet, daß**
die Lagerteile (14) ein Kunststoffmaterial enthalten.

10. Bodenbelag nach Anspruch 1, **dadurch gekennzeichnet, daß**
die Lagerteile (14) eine Ansammlung von Flächen umfassen, die im wesentlichen senkrecht zur oberen Lage (3) ausgerichtet sind, die an der Oberseite in der gleichen Höhe angrenzen und gemeinschaftlich zu einem Rost verbunden sind.

## Revendications

1. Revêtement de sol (2, 3), en particulier revêtement de sol stable, avec une action d'assèchement de l'humidité, ledit revêtement de sol comprenant
une couche supérieure (3) munie d'au moins une surface supérieure sensiblement plate, et
une couche inférieure (2) présentant des propriétés d'assèchement de l'humidité et supportant ladite couche supérieure (3)
caractérisé en ce que
ladite couche supérieure (3) et ladite couche inférieure (2) sont séparées l'une de l'autre ;
à la fois les couches supérieure (3) et inférieure (2) agissent sans absorber l'humidité ; et
ladite couche inférieure (2) comprend une pluralité d'éléments formant support (14) devant être placés sur un plancher (1) dans une relation de mise en butée mutuelle, chaque élément étant pourvu d'une plaque supérieure présentant une pluralité de colonnes de support (7) supportant ladite plaque supérieure et formées d'un seul tenant avec celle-ci, et une pluralité de trous traversants asséchants (9) s'étendant entre lesdites colonnes de support (7).

2. Revêtement de sol selon la revendication 1, caractérisé en ce que la plaque supérieure comprend une pluralité de bandes (8) dans des directions différentes, dans lequel une colonne (7) est située en dessous d'une zone d'intersection de ces bandes (8).

3. Revêtement de sol selon la revendication 1, caractérisé en ce que les éléments de support en butée (14) peuvent être mutuellement connectés à l'aide de paires correspondantes de saillies (11) et d'ouvertures (12).

4. Revêtement de sol selon la revendication 1, caractérisé en ce que la couche supérieure (3) contient un matériau fibreux encollé.

5. Revêtement de sol selon la revendication 1, caractérisé en ce que la couche supérieure (3) contient une matière plastique.

6. Revêtement de sol selon la revendication 1, caractérisé en ce que la couche supérieure (3) contient des particules de caoutchouc encollées.

7. Revêtement de sol selon la revendication 1, caractérisé en ce que la couche supérieure (3) comprend deux surfaces sensiblement plates parallèles l'une à l'autre.

8. Revêtement de sol selon la revendication 2 ou 3, caractérisé en ce que les éléments de support (14) contiennent du caoutchouc.

9. Revêtement de sol selon la revendication 2 ou 3, caractérisé en ce que les éléments de support (14) contiennent une matière plastique.

10. Revêtement de sol selon la revendication 1, caractérisé en ce que les éléments de support (14) comprennent une série de surfaces orientées sensiblement perpendiculairement à la couche supérieure (3), en étant reliées sur la partie supérieure à la même hauteur et mutuellement raccordées pour former une grille.
